# EUROPÄISCHE PATENTANMELDUNG

(11) **EP 0 864 410 A1**
(43) Veröffentlichungstag der Anmeldung: **16.09.1998**
(21) Anmeldenummer: 98104375.5
(22) Anmeldetag: 11.03.1998
(51) Int. Cl.: B29C 45/17

(54) **Spannvorrichtung für ein Spritzgiesswerkzeug einer Spritzgiessvorrichtung**

(30) Priorität: 11.03.1997 DE 19709892
(71) Anmelder: Fritzsche, Albrecht, 74420 Gaildorf (DE)
(72) Erfinder: Fritzsche, Albrecht, 74420 Gaildorf (DE)
(74) Vertreter: Dreiss, Fuhlendorf, Steimle & Becker

(57) **Zusammenfassung**

Bei einer Spannvorrichtung für ein Spritzgießwerkzeug einer Spritzgießvorrichtung weist das Spritzgießwerkzeug wenigstens einen Spann- und Zentrierring (3) auf. Dieser ist mit einer umlaufenden Ringnut (10) versehen, die sich nach außen erweitert. Die Formaufspannplatte (1) lagert zwei Verriegelungsbacken (6,7), die mit ihren keilförmigen Abschnitten (8,9) in die Ringnut (10) eingreifen. Diese Verriegelungsbacken (6,7) sind verschieblich in der Formaufspannplatte (1) gelagert und sind über einen Antrieb (17) angetrieben.

## Beschreibung

Die Erfindung betrifft eine Spannvorrichtung für ein Spritzgießwerkzeug einer Spritzgießvorrichtung, wobei das Spritzgießwerkzeug wenigstens einen Spann- und Zentrierring aufweist, welcher mit einer umlaufenden Ringnut versehen ist, und die Ringnut sich nach außen erweitert, mit zwei in einer Formaufspannplatte gelagerten Verriegelungsbacken, die einen keilförmigen Abschnitt aufweisen und mit diesem Abschnitt in die Ringnut des Spann- und Zentrierrings eingreifen und diesen verriegeln.

Aus der DE 3736634 C2 ist eine Zentriervorrichtung für ein Spritzgießwerkzeug bekannt geworden, welche einen Spann- und Zentrierring aufweist, der über zwei Hebel an einer Formaufspannplatte festgespannt werden kann. Diese Hebel sind einseitig schwenkbar gelagert und schwenken mit ihrem keilförmigen Abschnitt in diese Ringnut. Im gesamten Schwenkbereich der Hebel ist die Formaufspannplatte mit Ausnehmungen versehen, in welchen die Backen gelagert sind. Zwar kann mit dieser Vorrichtung in der Spann- und Zentrierring auf einfache Weise gespannt und das Spritzgießwerkzeug verriegelt werden, jedoch muß die Formaufspannplatte mit relativ großen Ausnehmungen für die verschwenkbaren Backen versehen werden. Im Bereich dieser Ausnehmungen kann die Formaufspannplatte nicht mit dem zur Düsenplatte korrespondierendem Lochbild versehen werden.

Der Erfindung liegt die Aufgabe zugrunde, eine Spannvorrichtung bereit zu stellen, welche ebenfalls ein einfaches und schnelles Spannen, Zentrieren und Verriegeln des Spritzgießwerkzeuges zuläßt, bei dem jedoch die Formaufspannplatte mit dem Lochbild der Düsenplatte versehen werden kann und bei dem die Formaufspannplatte relativ steif ist.

Diese Aufgabe wird erfindungsgemäß dadurch gelöst, daß die Verriegelungsbacken verschieblich in der Formaufspannplatte geführt sind, daß die Verriegelungsbacken beim Spannen oder Öffnen des Spritzgießwerkzeuges gegeneinander verfahrbar sind und daß sie über einen gemeinsamen Antrieb angetrieben werden.

Dadurch, daß die Verriegelungsbacken nicht verschwenkbar sondern verschieblich in der Formaufspannplatte gelagert sind, kann der Verschiebeweg im wesentlichen auf das Maß des Eingriffs in den Spann- und Zentrierring beschränkt werden. Auf diese Weise kann die in der Formaufspannplatte vorgesehene Ausnehmung auf ein Minimum beschränkt werden. Die Steifigkeit der Formaufspannplatte wird somit nicht unnötig beeinträchtigt und vorhandene Schraubenbohrungen auf der Düsenplatte können genützt werden.

Ein weiterer Vorteil wird darin gesehen, daß der Spann- und Zentrierring beim Einsetzen in die Formaufspannplatte nicht in eine bestimmte Winkelposition ausgerichtet werden muß und daß das Formwerkzeug, falls erforderlich, auch in einer gedrehten Position an der Formaufspannplatte befestigbar ist.

Bei einem bevorzugten Ausführungsbeispiel ist vorgesehen, daß die Verriegelungsbacken bezüglich der Spann- und Zentriereinrichtung einander gegenüber liegen. Dies hat den wesentlichen Vorteil, daß die Spannkräfte symmetrisch in die Spann- und Zentriereinrichtung eingeleitet werden. Verkanntungen bzw. auf die Spann- und Zentriereinrichtung einwirkende Momente werden auf diese Weise vermieden.

Vorteilhaft sind die Verriegelungsbacken mittels Federn in Schließrichtung vorgespannt. Die Schließkraft wird auf diese Weise durch Federkraft erzeugt, so daß die Verriegelungsbacken nicht nachgespannt werden müssen. Durch die Verwendung geeigneter Federn und der erforderlichen Anzahl dieser Federn können die gewünschten Spannkräfte aufgebracht werden.

Bei einem Ausführungsbeispiel ist vorgesehen, daß die Federn an den den keilförmigen Schnitten gegenüberliegenden Seiten der Verriegelungsbacken angreifen. Die Federkräfte bewirken somit eine direkte Verlagerung der Verriegelungsbacken in Richtung auf den Spann- und Zentrierring. Umlenkungen bzw. Hebelsysteme sind zum Spannen nicht erforderlich.

Bei einem Ausführungsbeispiel ist vorgesehen, daß die Federn als Schraubendruckfedern ausgebildet sind und in Sacklöchern in den Verriegelungsbacken gelagert sind. Derartige Schraubendruckfedern sind preiswert und einfach montierbar und durch die Verwendung entsprechender Federn kann die gewünschte Spannkraft erzeugt werden. Die Aufnahme der Federn in Sacklöchern hat den Vorteil, daß sie mit relativ geringem Aufwand verliersicher gehalten werden. Durch die Verwendung von Einlegescheiben kann die Vorspannkraft der Federn eingestellt werden.

Vorteilhaft werden die Verriegelungsbacken von Zug- und Druckstangen angetrieben. Über diese Zug- und Druckstangen werden die Verriegelungsbacken aus der Schließlage in die Offenlage bewegt, was entgegen der Richtung der Federkraft erfolgt. Dabei kann als Antrieb ein Exzenterantrieb fungieren, der von einem Hebel, von einem Hydraulik- oder Preumatikantrieb oder von einem Schrittmotor gebildet wird. Dieser Antrieb muß also nur dann betätigt werden, wenn die Spannvorrichtung in ihre Offenlage bewegt werden soll.

Vorteilhaft ist dabei der Antrieb fliegend gelagert, daß heißt, daß sich die Verstellkräfte und Reaktionskräfte ausschließlich an den Verriegelungsbacken abstützen. Auf diese Weise werden die Kräfte gleichmäßig in die Verriegelungsbacken eingeleitet.

Weitere Vorteile, Merkmale und Einzelheiten der Erfindung ergeben sich aus den Unteransprüchen sowie aus der nachfolgenden Beschreibung, in der unter Bezugnahme auf die Zeichnung ein besonders bevorzugtes Ausführungsbeispiel im einzelnen beschrieben ist. Dabei können die in der Zeichnung dargestellten und in den Ansprüchen und in der Beschreibung erwähnten Merkmale jeweils einzeln für sich oder in beliebiger Kombination erfindungswesentlich sein. In der Zeichnung zeigen:
- Figur 1: einen Ausschnitt der Formaufspannplatte, die Verriegelungsbacken und den Antrieb zeigend ;
- Figur 2: einen Schnitt II-II gemäß Figur 1 durch einen Spann- und Zentrierring sowie eine Verriegelungsbacke.

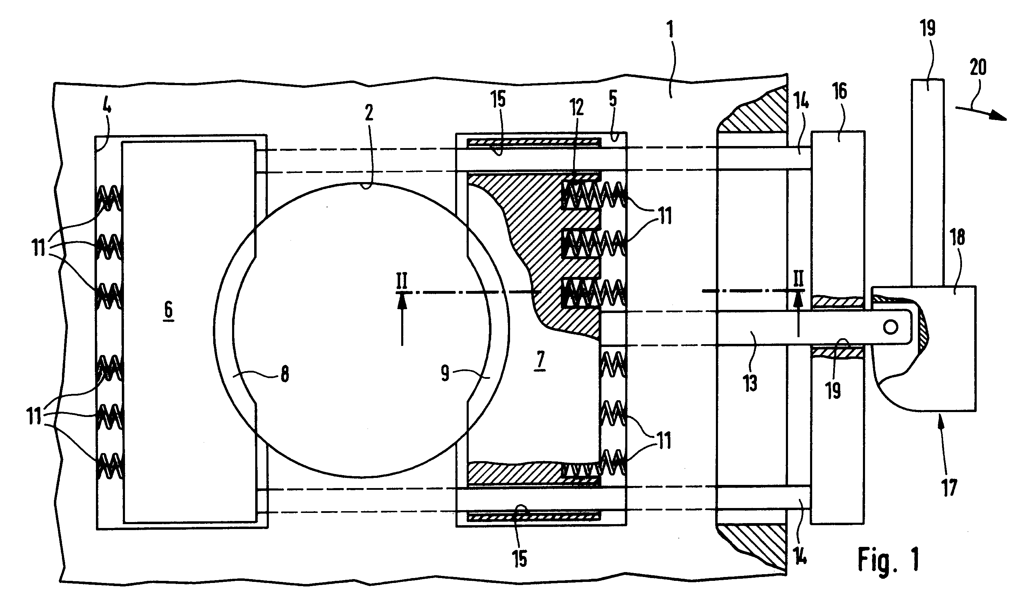

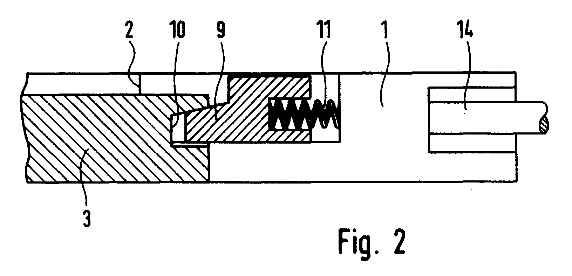

In der Figur 1 ist ein Ausschnitt einer insgesamt mit 1 bezeichneten Formaufspannplatte dargestellt, die eine zentrale Öffnung 2 aufweist, durch welche ein Spann- und Zentrierring 3 (Figur 2) hindurchgeführt werden kann. Dieser Spann- und Zentrierring ist fest mit einem nicht dargestellten Spritzgießwerkzeug verbunden. Die Formauspannplatte 1 weist zwei Ausnehmungen 4 und 5 auf, in welchem Verriegelungsbacken 5 und 6 verschieblich gelagert sind. Die Ausnehmungen 4 und 5 schneiden die Öffnung 2, so daß die Verriegelungsbacken 6 und 7 in den Bereich der Öffnung 2 hineinragen. Die in die Öffnung 2 hineinragenden Abschnitte 8 und 9 sind keilförmig ausgeführt, wie aus Figur 2 ersichtlich. Dabei greifen die keilförmigen Abschnitte 8 und 9 in eine Ringnut 10 des Spann- und Zentrierrings 3 ein, wobei die Schrägflächen der Abschnitten 8 und 9 mit einer Schrägfläche der Ringnut 10 derart zusammenwirken, daß der Spann- und Zentrierring 3 beim Spannvorgang gespannt, d.h. in Figur 2 nach oben bewegt wird, wodurch das Spritzgießwerkzeug an der Formaufspannplatte 1 verriegelt wird. Die Spannkräfte werden von Schraubendruckfedern 11 aufgebracht, die sich einerseits am Rand der Ausnehmungen 4 und 5, andererseits im Grund von Sacklöchern 12 abstützen. Diese Schraubendruckfedern 11 bewegen die Verriegelungsbacken 6 und 7 in Richtung auf die Öffnung 2 und bringen die Spannkräfte auf.

Die Verriegelungsbacken 6 und 7 sind mit Zug- und Druckstangen 13 bzw. 14 verbunden, wobei die Druckstangen 14 die Verriegelungsbacken 7 in entsprechenden Bohrungen 15 durchgreifen. Die Druckstangen 14 sind über einen Querträger 16 miteinander gekoppelt, wobei an diesem Querträger 16 ein Antrieb 17 angreift. Dieser Antrieb 17 wird von einem Exzenterhebel 18 gebildet, der sich einerseits am Querträger 16 abstützt, andererseits mit dem freien Ende der Zugstange 13 verbunden ist. Diese Druckstange 13 durchgreift den Querträger 16 über eine Bohrung 19.

Wird der Exzenterhebel 18 an einer Handhabe 19 in Richtung des Pfeils 20 bewegt, dann wird das freie Ende der Zugstange 13 vom Querträger 16 entfernt, wodurch zum einen die Zugkräfte in die Zugstange 13 und Druckkräfte in die Druckstangen 14 eingeleitet werden. Auf diese Weise wird die Verriegelungsbacke 6 in die Figur 1 nach links und die Verriegelungsbacke 7 nach rechts bewegt, wobei die Auslenkungen aufgrund der fliegenden Lagerung des Antriebs 17 und aufgrund der ausgleichenden Wirkung der Federn 11 gleichmäßig auf die Verriegelungsbacken 6 und 7 aufteilt. Ist der Exzenterhebel 18 zum Beispiel um 90° umgelegt, dann sind die keilförmigen Abschnitte 8 und 9 aus der Öffnung 2 herausgezogen, so daß der Spann- und Zentrierring 3 aus der Öffnung 2 herausgezogen werden kann. Die Schraubendurckfedern 11 nehmen dabei ihre komprimierte Lage ein. Da die Druckstangen 14 in weiten Bereichen entweder von der Formaufspannplatte 1 oder von der Verriegelungsbacke 7 geführt werden sind, neigen diese nicht zum Knicken.

## Patentansprüche

1. Spannvorrichtung für ein Spritzgießwerkzeug einer Spritzgießvorrichtung, wobei das Spritzgießwerkzeug wenigstens einen Spann- und Zentrierring (3) aufweist, welcher mit einer umlaufenden Ringnut (10) versehen ist, und die Ringnut (10) sich nach außen erweitert, mit zwei in einer Formaufspannplatte (1) gelagerten Verriegelungsbacken (6, 7), die einen keilförmigen Abschnitt (8, 9) aufweisen und mit diesem Abschnitt (8, 9) in die Ringnut (10) eingreifen und den Spann- und Zentrierring (3) verriegeln, **dadurch gekennzeichhet**, daß die Verriegelungsbacken (6, 7) verschieblich in der Formaufspannplatte (1) geführt sind, daß die Verriegelungsbacken (6, 7) beim Spannen oder Öffnen des Sprietzgießwerkzeugs gegeneinder verfahrbar sind und daß sie über einen gemeinsamen Antrieb (17) angetrieben werden.

2. Spannvorrichtung nach Anspruch 1, dadurch gekennzeichnet, daß die Verriegelungsbacken (6, 7) bezüglich des Spann- und Zentrierrings (3) einander gegenüber liegen.

3. Spannvorrichtung nach einem der vorhergehenden Ansprüche, dadurch gekennzeichnet, daß die Verriegelungsbacken (6, 7) mittels Federn (11) in Schließrichtung vorgespannt sind.

4. Spannvorrichtung nach Anspruch 3, dadurch gekennzeichnet, daß die Federn (11) an den den keilförmigen Abschnitten (8, 9) gegenüberliegenden Seiten der Verriegelungsbacken (6, 7) angreifen.

5. Spannvorrichtung nach Anspruch 3 oder 4, dadurch gekennzeichnet, daß die Federn als Schraubendruckfedern (11) ausgebildet sind und in Sacklöchern (12) in den Verriegelungsbacken (6, 7) gelagert sind.

6. Spannvorrichtung nach einem der vorhergehenden Ansprüche, dadurch gekennzeichnet, daß die Verriegelungsbacken (6, 7) von Zug- und Druckstangen (13, 14) angetrieben werden.

7. Spannvorrichtung nach einem der vorhergehenden Ansprüche, dadurch gekennzeichnet, daß der Antrieb (17) als Exzenterantrieb ausgebildet ist.

8. Spannvorrichtung nach einem der vorhergehenden Ansprüche, dadurch gekennzeichnet, daß der Antrieb (17) von einem Hebel (18) von einem Hydraulik-oder Preumatikantrieb oder von einem Schrittmotor gebildet wird.

9. Spannvorrichtung nach einem der vorhergehenden Ansprüche, dadurch gekennzeichnet, daß der Antrieb (17) fliegend gelagert ist.
